# EUROPÄISCHE PATENTSCHRIFT

(11) **EP 3 233 358 B1**
(45) Veröffentlichungstag und Bekanntmachung des Hinweises auf die Patenterteilung: **29.04.2020**
(21) Anmeldenummer: 15804133.5
(22) Anmeldetag: 03.12.2015
(51) Int. Cl.: B23K 9/173, B23K 9/29

(54) **VORRICHTUNG ZUR SCHWEISSDRAHT- UND PROZESSGASZUFÜHRUNG EINER SCHWEISSVORRICHTUNG**
APPARATUS FOR FEEDING WELDING WIRE AND PROCESS GAS TO A WELDING DEVICE
DISPOSITIF D'ALIMENTATION D'UN DISPOSITIF DE SOUDAGE EN GAZ DE TRAITEMENT ET FIL D'APPORT

(30) Priorität: 18.12.2014 DE 102014118970
(43) Veröffentlichungstag der Anmeldung: 25.10.2017
(73) Patentinhaber: Alexander Binzel Schweisstechnik GmbH & Co. KG, 35418 Buseck (DE)
(72) Erfinder: GUTZMANN, Jörg, 35274 Kirchhain (DE)
(74) Vertreter: Müller, Eckhard
(86) Internationale Anmeldenummer: PCT/EP2015/078455
(87) Internationale Veröffentlichungsnummer: WO 2016/096450

(56) Entgegenhaltungen:
- DE-A1- 3 432 087
- US-A1- 2014 319 103

## Beschreibung

Die Erfindung betrifft eine Vorrichtung zur Schweißdraht- und Prozessgaszuführung einer Schweißvorrichtung nach dem Oberbegriff des Patentanspruchs 1, wie sie aus der DE34 32 087 A1 bekannt ist.

Derartige Vorrichtungen zur Schweißdraht- und Prozessgaszuführung einer Schweißvorrichtung sind bereits in vielfältiger Art und Weise bekannt. In der Regel weisen sie eine Drahtzuführungsdüse mit einem Schweißdrahtkanal auf, wobei die Drahtzuführungsdüse lösbar mit einem Düsenstock verbunden ist. Der Düsenstock wiederum ist lösbar mit einem Profil verbunden, welches mit einem Schweißdrahtkanal versehen und mit einer Schweißdrahtfördereinrichtung verbunden ist. Ferner weisen derartige Vorrichtungen eine Prozessgaszuführeinrichtung auf, welche in der Regel zumindest einen Prozessgaskanal besitzt, wobei diese Prozessgaszuführeinrichtung mit einem Prozessgasreservoir verbunden ist. In der Regel wird dabei die Prozessgaszuführeinrichtung mit einer Gasdüse versehen, welche über dem Düsenstock platziert ist, sodass das Prozessgas direkt über den Düsenstock austritt. Das Prozessgas dient im Wesentlichen dazu, den beim Schweißen auftretenden Schweißschmauch wegzublasen. Sofern ein Inertgas als Prozessgas verwendet wird, wird durch das Prozessgas auch eine Schutzgasglocke gebildet, sodass sehr gute Schweißergebnisse erzielbar sind.

Aus der JP-H01-095887 A ist eine Schweißvorrichtung bekannt, bei welcher die dortige Drahtzuführungsdüse mit acht Bohrungen versehen ist, welche konzentrisch um deren Schweißdrahtkanal angeordnet sind. Durch diese Bohrungen wird das Prozessgas auf die Schweißstelle beziehungsweise den Schweißbereich geleitet. Zwar kann mit einer derartigen Gasführung Prozessgas während des Schweißprozesses konzentrisch um den Schweißdraht geblasen werden, sodass der Schweißdraht über seinen gesamten Umfang während des Schweißprozesses von Prozessgas umströmt wird, und durch dieses Prozessgas auch möglicherweise auftretender Schweißschmauch effektiv weggeblasen wird. Allerdings ist es technisch aufwendig, die als Verschleißteile ausgebildeten Drahtzuführungsdüsen mit derartigen Bohrungen zur Prozessgasführung zu versehen. Dadurch, dass die Drahtzuführungsdüse im Vergleich zur Schweißvorrichtung eine sehr geringe Standzeit hat, müssen für den Betrieb der Schweißvorrichtung viele derartige Drahtzuführungsdüsen hergestellt und bevorratet werden. Dabei ist zu beachten, dass nicht nur die Herstellung derartiger Drahtzuführungsdüsen mit Bohrungen für die Gaszuführung technisch aufwendig ist, vielmehr ist dazu auch ein erhöhter Energie- und Kostenaufwand notwendig, sodass sowohl in ökologischer als auch ökonomischer Hinsicht eine unzufriedenstellende Bilanz gegeben ist. Zudem ist die Gaszuführung während des Schweißprozesses bereits während der Zuführung durch die erhitzte Drahtzuführungsdüse sehr hohe Temperaturen ausgesetzt, sodass auch die Homogenität der Gaszuführung im Schweißbereich beziehungsweise der Schweißstelle aufgrund von Prozessgasströmungen, welche durch die hohe Temperatur der Drahtzuführungsdüse auftreten können, nicht optimal ist.

Weiterhin ist aus der US 5,313,046 eine Vorrichtung zur Schweißdraht- und Prozessgasführung einer Schweißvorrichtung nach dem Oberbegriff des Patentanspruchs 1 bekannt. Aus der DE 34 32 087 A1 ist eine dazu ähnliche Vorrichtung bekannt, wobei allerdings der dortige Düsenstock mit mehreren sich dem Prozessgaskanal anschließenden Bohrungen versehen ist, welche weder parallel noch in einem spitzen Winkel ± 5° zu dem Schweißdrahtkanal der Drahtzuführungsdüse und um die Drahtzuführungsdüse angeordnet sind. Diese Vorrichtungen können aber ebenfalls eine zufriedenstellende homogene Zuführung des Prozessgases nicht sicherstellen kann, da durch die Anordnung der dortigen, das Prozessgas führenden Bohrungen Unhomogenitäten nicht zu vermeiden sind.

Es ist daher Aufgabe der Erfindung, eine Vorrichtung zur Schweißdraht- und Prozessgasführung einer Schweißvorrichtung zur Verfügung zu stellen, mit welcher eine homogene Zuführung des Prozessgases um den Schweißdraht herum auf die Schweißstelle beziehungsweise den Schweißbereich ermöglicht wird, wobei aber auch die Herstellung und der Betrieb der Schweißvorrichtung sowohl in ökologischer als auch in ökonomischer Hinsicht optimiert werden soll.

Gelöst wird diese Aufgabe durch eine Vorrichtung mit den Merkmalen des Patentanspruchs 1. Vorteilhafte Ausgestaltungen der Erfindung finden sich in den Unteransprüchen.

Die erfindungsgemäße Vorrichtung zur Schweißdraht- und Prozessgaszuführung einer Schweißvorrichtung weist eine Drahtzuführungsdüse mit einem Schweißdrahtkanal und einen damit lösbar verbundenen Düsenstock auf. Weiterhin weist die Vorrichtung ein mit dem Düsenstock lösbar oder fest verbundenes und mit einem Schweißdrahtkanal versehenes Profil auf, welches mit einer Schweißdrahtfördereinrichtung verbindbar ist. Ferner weist die erfindungsgemäße Vorrichtung eine Prozessgaszuführeinrichtung mit einem Prozessgaskanal auf, wobei die Prozessgaszuführeinrichtung mit einem Prozessgasreservoir verbindbar ist. Die Vorrichtung zeichnet sich erfindungsgemäß dadurch aus, dass der Prozessgaskanal der Prozessgaszuführeinrichtung zumindest teilweise innerhalb des Profils angeordnet ist und der Düsenstock mit mehreren sich dem Prozessgaskanal anschließenden Bohrungen versehen ist, welche parallel oder in einem spitzen Winkel ± 5° zu dem Schweißdrahtkanal der Drahtzuführungsdüse und um die Drahtzuführungsdüse herum angeordnet sind. Als Prozessgaskanal der Prozessgaszuführeinrichtung soll dabei nicht unbedingt ein einzelner Kanal verstanden werden, sondern auch mehrere einzelne Kanäle, welche aber das Prozessgas an die in dem Düsenstock angeordneten Bohrungen weitergeben. Um ebenfalls eine möglichst homogene Ausbreitung des Prozessgases um den Schweißdraht herum im Bereich der Schweißstelle beziehungsweise des Schweißbereiches zu ermöglichen, ist es vorgesehen, dass der Düsenstock in Richtung eines die Drahtzuführungsdüse aufweisenden Endes zylindrisch ausgebildet ist, wobei die innerhalb des Düsenstocks angeordneten Bohrungen in Vertiefungen auf der Oberfläche des Düsenstocks auslaufen. Vorteilhafterweise verlaufen dabei die Vertiefungen auf der Oberfläche des zylindrischen Endes des Düsenstocks von den Öffnungen der Bohrungen innerhalb des Düsenstocks über die gesamte Längserstreckung dieses zylindrischen Endes. Hierdurch ist erreicht, dass sich das Prozessgas bereits vor dem Ausströmen auf die Drahtzuführungsdüse homogen um den Düsenstock herum verteilen kann, und nicht erst unmittelbar vor der Drahtzuführungsdüse aus dem Düsenstock heraustritt.

Dabei hat es sich weiterhin als vorteilhaft erwiesen, dass die Vertiefungen im Querschnitt senkrecht zur Längsachse des Düsenstocks kreissegmentförmig ausgebildet sind, wobei der Radius der Kreissegmente dem Radius der Bohrungen entspricht. Auch hierdurch ist die Homogenität des Prozessgases um den Schweißdraht im Bereich der Schweißstelle beziehungsweise des Schweißbereiches nochmals in besonderer Weise sichergestellt, wobei sich derartige Vertiefungen mit bekannten Herstellungsverfahren technisch einfach und sicher herstellen lassen.

Durch die erfindungsgemäße Ausgestaltung der Vorrichtung ist die Prozessgaszuführung zur Schweißstelle beziehungsweise dem Schweißbereich nicht an oder innerhalb der Drahtzuführungsdüse angeordnet, sodass das Prozessgas während des Schweißens nicht schon vor dem Auftreffen auf die Schweißstelle beziehungsweise den Schweißbereich durch die sich auf hoher Temperatur befindliche Drahtzuführungsdüse unnötig erhitzt wird. Hierdurch sind thermisch bedingte Strömungen des Prozessgases minimiert, sodass das Prozessgas besonders homogen um den Schweißdraht herum auf die Schweißstelle beziehungsweise den Schweißbereich geführt werden kann. Dabei hat sich gezeigt, dass hinsichtlich der Schweißnaht sehr gute Ergebnisse erzielt werden.

Dabei kann der Querschnitt der Vertiefungen über ihre gesamte Längserstreckung kontant sein. Allerdings ist es auch möglich, dass sich der Querschnitt der Vertiefungen von den der Bohrungen weg weisend verkleinert oder vergrößert. In jedem Fall ist dadurch gewährleistet, dass das Prozessgas innerhalb dieser Vertiefungen nach Austritt aus den Bohrungen weiter geführt ist, während gleichzeitig oberhalb dieser Vertiefungen ein gleichmäßiges und homogenes Verteilen des Prozessgases um den Düsenstock stattfinden. Hierdurch wird das Prozessgas besonders homogen verteilt um den Schweißdraht herum auf die Schweißstelle beziehungsweise den Schweißbereich geführt.

Um dabei eine besonders homogene beziehungsweise gleichmäßige Zuführung des Prozessgases um den Schweißdraht herum auf die Schweißstelle beziehungsweise den Schweißbereich zu ermöglichen, hat es sich als vorteilhaft erwiesen, dass die Bohrungen innerhalb des Düsenstocks auf einem/einer konzentrisch beziehungsweise elliptisch zum Schweißdrahtkanal der Drahtzuführungsdüse verlaufenden Kreis beziehungsweise Ellipse angeordnet sind.

Weiterhin hat es sich in einer anderen Ausgestaltung der Erfindung als sinnvoll erwiesen, dass ein einen Prozesskanal und einen Drahtzuführungskanal aufweisender Sockel vorgesehen ist, in welchem das Profil aufgenommen ist und welcher Anschlusselemente für eine Schweißdrahtfördereinrichtung und ein Prozessgasreservoir aufweist. Durch diese Ausgestaltung ist es ermöglicht, die Erfindung in allen möglichen Schweißprozessen einzusetzen, da die dabei verwendeten Schweißvorrichtungen nur entsprechende Anschlusselemente aufweisen müssen, damit die erfindungsgemäße Vorrichtung daran angeschlossen werden kann.

Damit keine unbeabsichtigten, durch hohe Temperaturen bedingte Strömungen des Prozessgases sich störend im Schweißbereich auswirken, hat es sich weiterhin als vorteilhaft erwiesen, dass der Prozessgaskanal des Profils und die sich daran anschließenden Bohrungen des Düsenstocks gegenüber der Umgebung prozessgasdicht miteinander in Verbindung stehen. Hierdurch ist ein ungewollter Austritt des Prozessgases vermieden. Das Prozessgas kann daher nur über die Bohrungen des Düsenstocks aus der erfindungsgemäßen Vorrichtung heraustreten.

Insofern ist damit die Kontinuität der Homogenität des Prozessgases an der Schweißstelle beziehungsweise dem Schweißbereich sichergestellt.

Erfindungsgemäß ist dabei das Profil als Profilrohr ausgebildet. Derartige als Profilrohr ausgebildete Profile lassen sich in einfacher Weise mit den weiteren Teilen der erfindungsgemäßen Vorrichtung verbinden. Ferner ist es mit derartigen Profilrohren auch in einfacher Weise möglich, darin Prozessgaskanäle und Drahtzuführungskanäle anzuordnen.

Damit sich das Prozessgas besonders gleichmäßig um den Schweißdraht herum ausbreiten kann, ist es erfindungsgemäß weiterhin vorgesehen, dass der Düsenstock wenigstens drei, vorzugsweise sechs, besonders bevorzugt acht Bohrungen aufweist, welche vorzugsweise alle den gleichen Radius aufweisen.

In die gleiche Richtung zielt dabei auch die Ausgestaltung der Erfindung, bei der die Bohrungen rotationssymmetrisch um die Längsachse des Düsenstocks angeordnet sind. Unter rotationssymmetrisch soll dabei verstanden werden, dass bei Drehungen des Düsenstocks um einen bestimmten Winkel die Bohrungen wieder deckungsgleich zum Liegen kommen. So wären im Falle von drei Bohrungen diese jeweils um 120° versetzt zueinander angeordnet, während bei vier Bohrungen diese um 90°, bei sechs Bohrungen um 60° und bei acht Bohrungen um 45° versetzt angeordnet sind.

Abschließend soll auch noch eine Schweißvorrichtung, insbesondere eine Laserschweiß- und/oder Lötvorrichtung mit einer Vorrichtung nach einem der vorherigen Ansprüche geschützt sein.

Weitere Ziele, Vorteile, Merkmale und Anwendungsmöglichkeiten der vorliegenden Erfindung ergeben sich aus der nachfolgenden Beschreibung von Ausführungsbeispielen anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel einer erfindungsgemäßen Vorrichtung in einer Draufsicht,
- Figur 2:: das Ausführungsbeispiel der Figur 1 in einer Querschnittdarstellung entlang der Schnittebene A-A der Figur 1,
- Figur 3:: das Ausführungsbeispiel der Figur 1 in einer Querschnittdarstellung entlang der Schnittebene B-B der Figur 1,
- Figur 4:: der Düsenstock des Ausführungsbeispiels der Figur 1 in einer Teilschnittdarstellung und
- Figur 5:: der Düsenstock gemäß Figur 4 in einer Schnittdarstellung entlang der Schnittebene C-C der Figur 4.

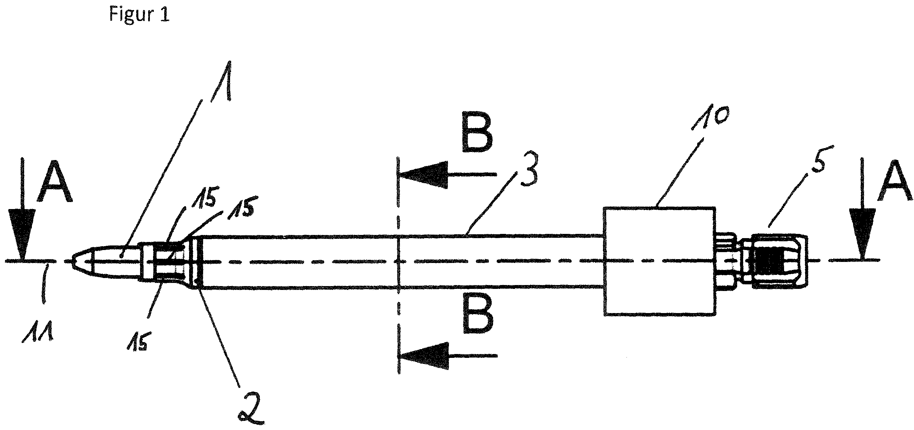

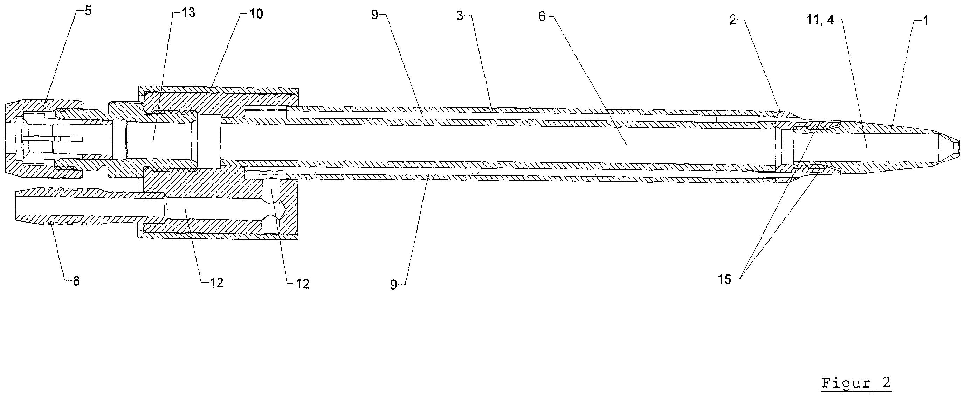

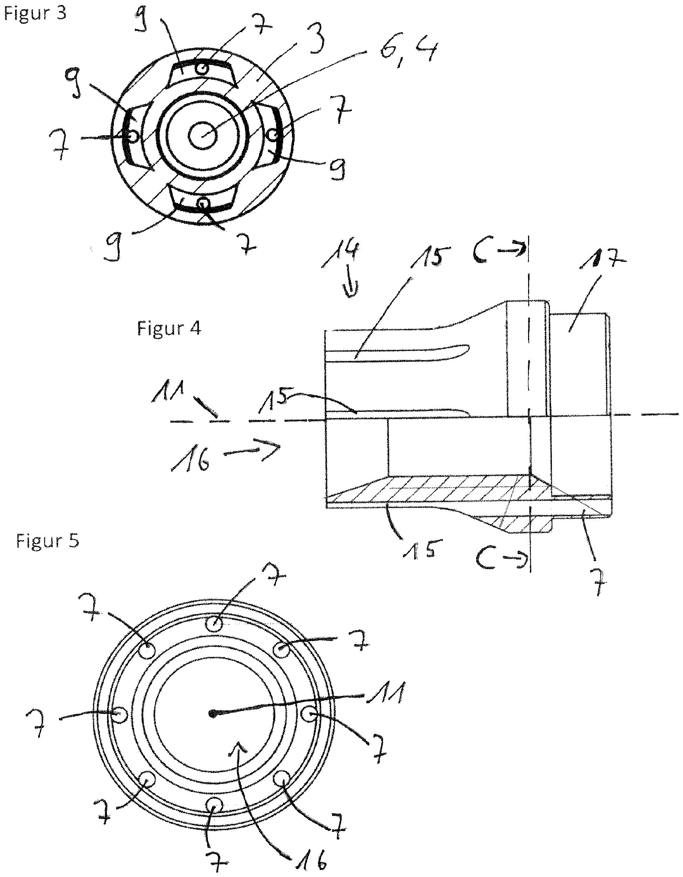

In den Figuren 1 bis 3 ist ein Ausführungsbeispiel einer erfindungsgemäßen Vorrichtung zur Schweißdraht- und Prozessgaszuführung einer Schweißvorrichtung in verschiedenen Darstellungen gezeigt. Die wesentlichen Elemente der Vorrichtung sind dabei in der Figur 1 besonders gut erkennbar, während in den Figuren 2 und 3 der Aufbau der einzelnen Elemente selbst verdeutlicht ist.

Die Vorrichtung zur Schweißdraht- und Prozessgaszuführung einer Schweißvorrichtung weist ein als Profilrohr ausgebildetes Profil 3 auf, welches einerseits mit einem Sockel 10 verbunden ist, welcher Anschlusselemente 5 und 8 zum Verbinden der Vorrichtung mit einer Schweißdrahtfördereinrichtung und einem Prozessgasreservoir aufweist. Andererseits weist das als Profilrohr ausgebildete Profil 3 an seinem anderen Ende einen Düsenstock 2 auf, in den eine Drahtzuführungsdüse 1 eingesetzt ist.

Wie insbesondere der Figur 2 zu entnehmen ist, ist der Sockel 10 mit einem Prozessgaskanal 12 versehen, der sich zum einen in das Anschlusselement 8 für das Prozessgasreservoir 8 erstreckt und zum anderen in Prozessgaskanäle 9 des als Profilrohr ausgebildeten Profils 3 übergeht.

Weiter besitzt der Sockel 10 einen Drahtzuführungskanal 13, der zum einen mit dem Anschlusselement 5 für die Drahtzuführeinrichtung und zum anderen mit einem Schweißdrahtkanal 6 des als Profilrohr ausgebildeten Profils 3 in einer Längsachse 11 der gesamten Vorrichtung angeordnet ist. Das als Profilrohr ausgebildete Profil 3 weist an seinem dem Sockel 10 gegenüberliegenden Ende eine Öffnung auf, an der der Düsenstock 2 mit einem Anschlusselement 17 angeordnet ist.

Der Düsenstock 2 ist mit einer Öffnung 16 versehen, in welcher die Drahtzuführungsdüse 1 der Vorrichtung angeordnet ist. Die Drahtzuführungsdüse 1 weist einen Schweißdrahtkanal 4 auf, sodass der Schweißdraht von der Drahtzuführungseinrichtung über das Anschlusselement 5 für die Drahtzuführungseinrichtung und den Drahtzuführungskanal 13 des Sockels 10, den Schweißdrahtkanal 6 des Profilrohrs 3 in den Schweißdrahtkanal 4 der Drahtzuführungsdüse 1 geführt werden kann. Aus dem Schweißdrahtkanal 4 der Drahtzuführungsdüse 1 tritt der Schweißdraht heraus und kann nach einem entsprechenden Energieeintrag durch die Schweißvorrichtung unter Ausbildung einer Schweißnaht die zu schweißenden Elemente miteinander verbinden.

Während des Schweißvorgangs wird Prozessgas aus einem Prozessgasreservoir über das Anschlusselement 8 für das Prozessgasreservoir, den Prozessgaskanal 12 des Sockels 10 sowie den Prozessgaskanälen 9 des als Profilrohr ausgebildeten Profils 3 und Bohrungen 7 des Düsenstocks 2 auf die Schweißstelle beziehungsweise den Schweißbereich aufgebracht.

Dabei ist insbesondere der Schnittdarstellung gemäß der Figur 3 deutlich zu entnehmen, dass die Prozessgaskanäle 9 des Profilrohrs 3 mit den Bohrungen 7 des Düsenstocks 2 in Wirkkontakt stehen. In Figur 3 sind allerdings durch die vier Prozessgaskanäle 9 des Profils 3 auch nur vier Bohrungen 7 des Düsenstocks 2 erkennbar.

Wie jedoch insbesondere der Figur 5 zu entnehmen ist, weist der Düsenstock 2 in diesem Ausführungsbeispiel acht konzentrisch um die Längsachse 11 angeordnete Bohrungen 7 auf. Die Prozessgaskanäle 9 des Profils 3 sind dabei derart ausgebildet, dass sie im Anschlussbereich des Anschlusselementes 17 des Düsenstocks 2 alle acht Bohrungen 7 im Düsenstock 2 mit Prozessgas versorgen können.

In der Figur 4 ist der Düsenstock 2 der Vorrichtung in einer Teilschnittdarstellung gezeigt. Insbesondere ist hier deutlich zu erkennen, dass der Düsenstock 2 in Richtung eines die Drahtzuführungsdüse 1 aufweisenden Endes 14 zylindrisch ausgebildet ist, wobei die innerhalb des Düsenstocks 2 angeordneten Bohrungen 7 in Vertiefungen 15 auf der Oberfläche des Düsenstocks 2 auslaufen. Die Vertiefungen 15 auf der Oberfläche des zylindrischen Endes 14 des Düsenstocks 2 verlaufen dabei von den Öffnungen der Bohrungen 7 innerhalb des Düsenstocks 2 über die gesamte Längserstreckung dieses zylindrischen Endes 14. Dabei ist in dem vorliegenden Ausführungsbeispiel der Querschnitt der Vertiefungen 15 über ihre gesamte Längserstreckung kontant. Allerdings ist es auch in anderen hier nicht dargestellten Ausführungsbeispielen möglich, dass sich dieser Querschnitt von den Öffnungen der Bohrungen 7 weg weisend verkleinert oder vergrößert. In jedem Fall ist dadurch gewährleistet, dass das Prozessgas innerhalb dieser Vertiefungen 15 nach Austritt aus den Bohrungen weiter geführt ist, während gleichzeitig oberhalb dieser Vertiefungen 15 ein gleichmäßiges und homogenes Verteilen des Prozessgases um den Düsenstock 2 stattfinden. Hierdurch wird das Prozessgas besonders homogen verteilt um den Schweißdraht herum auf die Schweißstelle beziehungsweise den Schweißbereich geführt.

Ferner ist hierbei auch zu erkennen, dass die Bohrungen 7 parallel zu dem Schweißdrahtkanal 4 der Drahtzuführungsdüse 1 verlaufen. Wie insbesondere den Figuren 1 und 2 zu entnehmen ist, liegt der Schweißdrahtkanal 4 der Drahtzuführungsdüse 1 genau in der Längsachse 11 der Vorrichtung beziehungsweise des Düsenstocks 2. Allerdings ist es auch möglich, dass in einem anderen hier nicht dargestellten Ausführungsbeispiel die Bohrungen 7 in einem spitzen Winkel zu dem Schweißdrahtkanal 4 der Drahtzuführungsdüse 1 um diese herum angeordnet sind.

Durch die rotationssymmetrische und konzentrische Anordnung der Bohrungen 7 des Düsenstocks 2 und somit auch der Vertiefungen 15 wird das über die Prozessgaszuführungskanäle 9 und 12 zugeführte Prozessgas besonders homogen um den Schweißdraht während des Schweißens auf die Schweißstelle beziehungsweise den Schweißbereich geführt. Hierdurch ergeben sich während des Schweißprozesses an der Schweißstelle beziehungsweise in dem Schweißbereich besonders homogene Prozessgasverhältnisse, sodass besonders gute Schweißeigenschaften der Schweißnaht erzeugt werden können.

### Bezugszeichenliste

- 1: Drahtzuführungsdüse
- 2: Düsenstock
- 3: Profil
- 4: Schweißdrahtkanal
- 5: Anschlusselement
- 6: Schweißdrahtkanal
- 7: Bohrung
- 8: Anschlusselement
- 9: Prozessgaskanal
- 10: Sockel
- 11: Längsachse
- 12: Prozessgaskanal
- 13: Drahtzuführungskanal
- 14: Ende
- 15: Vertiefung
- 16: Öffnung
- 17: Anschlusselement
- A-A: Schnitt
- B-B: Schnitt
- C-C: Schnitt

## Patentansprüche

1. Vorrichtung zur Schweißdraht- und Prozessgaszuführung einer Schweißvorrichtung mit einer einen Schweißdrahtkanal (4) aufweisenden Drahtzuführungsdüse (1), einem mit der Drahtzuführungsdüse (1) lösbar verbundenen Düsenstock (2),
einem mit dem Düsenstock (2) lösbar oder fest verbundenen und einen Schweißdrahtkanal (6) aufweisenden Profil (3), welches mit einer Schweißdrahtfördereinrichtung verbindbar ist, und einer einen Prozessgaskanal (9) aufweisenden Prozessgaszuführeinrichtung, welche mit einem Prozessgasreservoir verbindbar ist, wobei der Prozessgaskanal (9) der Prozessgaszuführeinrichtung zumindest teilweise innerhalb des Profils (3) angeordnet ist und der Düsenstock (2) mit mehreren sich dem Prozessgaskanal (9) anschließenden Bohrungen (7) versehen ist, welche parallel oder in einem spitzen Winkel ±5° zu dem Schweißdrahtkanal (4) der Drahtzuführungsdüse (1) und um die Drahtzuführungsdüse (1) angeordnet sind, wobei der Düsenstock (2) in Richtung eines die Drahtzuführungsdüse (1) aufweisenden Endes (14) zylindrisch ausgebildet ist, wobei die innerhalb des Düsenstocks angeordneten Bohrungen (7) in Vertiefungen (15) auf der Oberfläche des Düsenstocks (2) auslaufen, **dadurch gekennzeichnet, dass** das Profil (3) als Profilrohr ausgebildet ist und darin der Prozessgaskanal (9) und der Schweißdrahtkanal (6) angeordnet sind.

2. Vorrichtung nach Anspruch 1, **dadurch gekennzeichnet, dass** die Vertiefungen (15) im Querschnitt senkrecht zur Längsachse (11) des Düsenstocks kreissegmentförmig ausgebildet sind, wobei der Radius der Kreissegmente dem Radius der Bohrungen (7) entspricht.

3. Vorrichtung nach Anspruch 1 oder 2, **dadurch gekennzeichnet, dass** die Bohrungen (7) auf einem/einer konzentrisch oder elliptisch zum Schweißdrahtkanal (4) verlaufenden Kreis beziehungsweise Ellipse angeordnet sind.

4. Vorrichtung nach einem der vorhergehenden Ansprüche, **dadurch gekennzeichnet, dass** ein einen Prozessgaskanal (12) und einen Drahtzuführungskanal (13) aufweisender Sockel (10) vorgesehen ist, in welchem das Profil (3) aufgenommen ist und welcher Anschlusselemente (5, 8) für eine Schweißdrahtfördereinrichtung und ein Prozessgasreservoir aufweist.

5. Vorrichtung nach einem der vorhergehenden Ansprüche, **dadurch gekennzeichnet, dass** der Prozessgaskanal (9) des Profils und die sich daran anschließenden Bohrungen (7) des Düsenstocks gegenüber der Umgebung prozessgasdicht miteinander in Verbindung stehen.

6. Vorrichtung nach einem der vorhergehenden Ansprüche, **dadurch gekennzeichnet, dass** der Düsenstock (2) wenigstens drei, vorzugsweise sechs, besonders bevorzugt acht Bohrungen (7) aufweist, welche vorzugsweise alle den gleichen Radius aufweisen.

7. Vorrichtung nach Anspruch 6, **dadurch gekennzeichnet, dass** die Bohrungen (7) vorzugsweise rotationssymmetrisch um eine Längsachse (11) des Düsenstocks (2) angeordnet sind.

8. Schweißvorrichtung, insbesondere Laserschweiß- und/oder Lötvorrichtung mit einer Vorrichtung nach einem der vorhergehenden Ansprüche.

## Claims

1. Apparatus for feeding welding wire and process gas to a welding apparatus, with a wire feeding nozzle (1), which has a welding wire channel (4), a nozzle block (2), which is detachably connected to the wire feeding nozzle (1), a profile (3), which is detachably or fixedly connected to the nozzle block (2), has a welding wire channel (6) and can be connected to a welding wire conveying device, and a process gas feeding device, which has a process gas channel (9) and can be connected to a process gas reservoir, wherein the process gas channel (9) of the process gas feeding device is arranged at least partially within the profile (3), and the nozzle block (2) is provided with multiple boreholes (7), which adjoin the process gas channel (9) and are arranged parallel or at an acute angle of ±5° to the welding wire channel (4) of the wire feeding nozzle (1) and around the wire feeding nozzle (1), wherein the nozzle block (2) is formed cylindrically in the direction of an end (14) having the wire feeding nozzle (1), wherein the boreholes (7) arranged within the nozzle block run out into recesses (15) on the surface of the nozzle block (2), **characterized in that** the profile (3) is formed as a profile tube and the process gas channel (9) and the welding wire channel (6) are arranged therein.

2. Apparatus according to Claim 1, **characterized in that** the recesses (15) are formed in the cross section perpendicular to the longitudinal axis (11) of the nozzle block in the form of segments of a circle, wherein the radius of the segments of a circle corresponds to the radius of the boreholes (7).

3. Apparatus according to Claim 1 or 2, **characterized in that** the boreholes (7) are arranged on a circle or an ellipse running concentrically or elliptically in relation to the welding wire channel (4).

4. Apparatus according to one of the preceding claims, **characterized in that** a base (10), which has a process gas channel (12) and a wire feeding channel (13), receives the profile (3) and has connection elements (5, 8) for a welding wire conveying device and a process gas reservoir, is provided.

5. Apparatus according to one of the preceding claims, **characterized in that** the process gas channel (9) of the profile and the adjoining boreholes (7) of the nozzle block are connected to one another in a sealed manner with respect to the process gas in relation to the surrounding area.

6. Apparatus according to one of the preceding claims, **characterized in that** the nozzle block (2) has at least three, preferably six, particularly preferably eight, boreholes (7), which preferably all have the same radius.

7. Apparatus according to Claim 6, **characterized in that** the boreholes (7) are preferably arranged rotationally symmetrically around a longitudinal axis (11) of the nozzle block (2).

8. Welding apparatus, in particular a laser-welding and/or soldering apparatus, with an apparatus according to one of the preceding claims.

## Revendications

1. Dispositif d'alimentation d'un dispositif de soudage en gaz de processus et en fil d'apport, ledit dispositif d'alimentation comprenant une buse d'alimentation en fil (1) pourvue d'un conduit de fil d'apport (4), un porte-buse (2) relié de manière amovible à la buse d'alimentation en fil (1), un profilé (3) qui est relié de façon fixe ou amovible au porte-buse (2), qui comporte un conduit de fil d'apport (6) et qui peut être relié à un moyen de transport de fil d'apport, et un moyen d'alimentation en gaz de processus qui comporte un conduit de gaz de processus (9) et qui peut être relié à un réservoir de gaz de processus, le conduit de gaz de processus (9) du moyen d'alimentation en gaz de processus étant disposé au moins partiellement à l'intérieur du profilé (3) et le porte-buse (2) étant pourvu d'une pluralité d'alésages (7) qui sont adjacents au conduit de gaz de processus (9) et qui sont disposés parallèlement ou selon un angle aigu de ± 5° par rapport au conduit de fil d'apport (4) de la buse d'alimentation en fil (1) et autour de la buse d'alimentation en fil (1), le porte-buse (2) étant cylindrique en direction d'une extrémité (14) qui comporte la buse d'alimentation en fil (1), les alésages (7) disposés à l'intérieur du porte-buse se terminant dans des évidements (15) sur la surface du porte-buse (2), **caractérisé en ce que** le profilé (3) est conçu comme un tube profilé et le conduit de gaz de processus (9) et le conduit de fil d'apport (6) sont disposés à l'intérieur.

2. Dispositif selon la revendication 1, **caractérisé en ce que** les évidements (15) sont conçus sous la forme d'un segment de cercle en coupe transversale perpendiculairement à l'axe longitudinal (11) du porte-buse, le rayon des segments de cercle correspondant au rayon des alésages (7).

3. Dispositif selon la revendication 1 ou 2, **caractérisé en ce que** les alésages (7) sont disposés sur un cercle ou une ellipse s'étendant concentriquement ou elliptiquement par rapport au conduit de fil d'apport (4).

4. Dispositif selon l'une des revendications précédentes, **caractérisé en ce qu'**une embase (10) est prévue qui comporte un conduit de gaz de processus (12) et un conduit d'alimentation en fil (13), dans laquelle le profilé (3) est logé et qui comporte des éléments de raccordement (5, 8), destiné à un moyen de transport de fil d'apport, et un réservoir de gaz de processus.

5. Dispositif selon l'une des revendications précédentes, **caractérisé en ce que** le conduit de gaz de processus (9) du profilé et les alésages (7), adjacents à celui-ci, du porte-buse sont connectés l'un à l'autre de manière étanche au gaz de processus par rapport à l'environnement.

6. Dispositif selon l'une des revendications précédentes, **caractérisé en ce que** le porte-buse (2) comporte au moins trois, de préférence six, de manière particulièrement préférée huit, alésages (7) qui ont de préférence tous le même rayon.

7. Dispositif selon la revendication 6, **caractérisé en ce que** les alésages (7) sont de préférence disposés à symétrie de rotation autour d'un axe longitudinal (11) du porte-buse (2) .

8. Dispositif de soudage, notamment dispositif de brasage et/ou de soudage laser comprenant un dispositif selon l'une des revendications précédentes.
